# EUROPÄISCHE PATENTSCHRIFT

(11) **EP 1 108 582 B1**
(45) Veröffentlichungstag und Bekanntmachung des Hinweises auf die Patenterteilung: **03.03.2004**
(21) Anmeldenummer: 00126760.8
(22) Anmeldetag: 06.12.2000
(51) Int. Cl.: B60J 7/185, B60J 7/20, E05B 65/19

(54) **Vorrichtung zur Verriegelung zweier relativ zueinander verstellbarer, zwangsgeführter Elemente**
Device for locking two guided elements displaceable to each other
Dispositif de verrouillage pour deux éléments relativement déplaçables entre eux

(30) Priorität: 13.12.1999 DE 19960012
(43) Veröffentlichungstag der Anmeldung: 20.06.2001
(73) Patentinhaber: CTS Fahrzeug-Dachsysteme GmbH, 21079 Hamburg (DE)
(72) Erfinder: Kaute, Markus, 71272 Renningen (DE); Obendiek, Klaus, 94032 Passau (DE); Schuler, Eckart, 71065 Sindelfingen (DE); Zipperle, Sigfried, 71134 Aidlingen (DE)
(74) Vertreter: Müller, Gottfried

(56) Entgegenhaltungen:
- EP-A- 0 657 607
- DE-A- 1 505 721
- DE-A- 3 743 282
- DE-A- 4 111 646

## Beschreibung

Die Erfindung betrifft eine Vorrichtung zur Verriegelung zweier relativ zueinander verstellbarer, zwangsgeführter Elemente in einer Verriegelungsposition gemäß dem Oberbegriff des Anspruches 1.

Mit einer bekannten gattungsgemäßen Vorrichtung der vorgenannten Art (DE 37 43 282 A1) wird eine den Verdeckkasten eines Cabriolet-Fahrzeuges überdeckende, motorisch verstellbare Verdeckklappe gegen die Karosserie des Fahrzeugs verriegelt, wobei die Karosserie als Tragelement für ein Führungsgetriebe mit einem Verriegelungsglied dient und die Verdeckklappe das Gegenelement bildet, das ein Gegenglied zum Verriegelungsglied aufweist. Gestaltet ist das Gegenglied als Bügel, der bei Verstellung der Verdeckklappe in Schließrichtung das karosserieseitige, in Bereitschaftsstellung befindliche Verriegelungsglied beaufschlagt und der anschließend über das Verriegelungsglied und zusammen mit dem Verriegelungsglied über einen diesen zugeordneten Stellantrieb in eine der Schließlage der Verdeckklappe entsprechende Verriegelungsstellung überführt wird.

Das Verriegelungsglied als Bestandteil des Führungsgetriebes ist bei dieser Lösung als Gabelfalle ausgebildet und um eine zum Tragbalken, und damit zur Karosserie lagefeste Achse schwenkbar. Dies geschieht unter Vermittlung eines zum Verriegelungsglied koaxialen Kraftübertragungshebels, der über den Stellantrieb in Form eines doppelt wirkenden Hydraulikzylinders verschwenkbar ist, wozu ein dem Kraftübertragungshebel zugeordneter Mitnehmer mit Spiel zwischen zwei Anschlagflächen des Verriegelungsgliedes eingreift.

Bei geöffneter Verdeckklappe nimmt das Verriegelungsglied seine Bereitschaftsstellung ein, abgestützt über den Stellzylinder unter Vermittlung des in das Verriegelungsglied mit Leerhub eingreifenden Mitnehmers, der über den als doppelt wirkenden Hydraulikzylinder ausgebildeten Stellzylinder in der Bereitschaftsstellung in Anlage zur der Bereitschaftsstellung zugeordneten öffnungsseitigen Anschlagfläche des Verriegelungsgliedes gehalten ist, bei Abstützung des Verriegelungsgliedes gegen eine in Gegenrichtung wegbegrenzende Sperrklinke. Es ist somit das Verriegelungsglied in seiner Bereitschaftsstellung gegen Verstellen durch den Stellantrieb in Richtung auf seine der Schließlage der Verdeckklappe entsprechende Verriegelungsstellung gesperrt, so lange der Stellantrieb nicht entsprechend angesteuert wird.

Dies geschieht, sobald die Verdeckklappe bei ihrer Verstellung in Schließrichtung auf das in Bereitschaftsstellung gehaltene Verriegelungsglied auftrifft und über das Verriegelungsglied auch der Mitnehmer und der diesen tragende Kraftübertragungshebel in der Schließrichtung der Verdeckklappe entsprechender Richtung mitgenommen werden.

Mit dieser Mitnahme ist eine Ansteuerung des Stellantriebes in Richtung einer Verstellung des Verriegelungsgliedes in Richtung auf seine Verriegelungsstellung verbunden, und damit die Sperre gegen Verstellung des Verriegelungsgliedes in Richtung auf seine Verriegelungsstellung durch den Stellantrieb aufgehoben. Das Verriegelungsglied kann somit über den Mitnehmer in seine Verriegelungsstellung eingeschwenkt werden, die durch Verrasten der Sperrklinke gegenüber dem Kraftübertragungshebel bei drucklosem Stellzylinder gesichert wird und die durch Beaufschlagung des Stellzylinders in seiner der Öffnungsrichtung des Verriegelungsgliedes entsprechenden Stellung dadurch zu lösen ist, dass mit entsprechender Ansteuerung des Stellzylinders der Kraftübertragungshebel die Sperrklinke aus ihrer Raststellung aushebt, bevor der im Rahmen des Leerhubes gegenüber dem Verriegelungsglied verschwenkbare Mitnehmer letzteres in Öffnungsrichtung mitnimmt. Das Verriegelungsglied in seiner Bereitschaftsstellung gegen Verstellen in Richtung auf seine Verriegelungsstellung zu sperren ist bei einer derartigen Ausgestaltung des Führungsgetriebes somit mit einem verhältnismäßig großen Steuerungsaufwand verbunden.

Aus der DE 15 05 721 A ist eine weitere Vorrichtung zur Verriegelung eines Kraftfahrzeugklappverdecks in dessen geschlossener Lage, in der das Verdeck frontseitig gegen den Windlauf der Windschutzscheibe verspannt wird, bekannt. Das Verdeck ist mit einem als Öse ausgestatteten Gegenglied versehen, dem seitens des Windlaufes als Verriegelungsglied ein Haken zugeordnet ist, der über ein Führungsgetriebe am Windlauf angelenkt ist und durch einen Stellantrieb in Form eines Hydraulikzylinders verstellbar ist. Hierbei nimmt der Haken im Regelfall eine in den Windlauf versenkte Lage ein, und zwar sowohl bei geschlossenem wie auch bei geöffnetem Verdeck, und er wird beim Schließen des Verdecks über den diesem zugeordneten Verstellantrieb durch Ansteuerung des das Verriegelungsglied über das Führungsgetriebe beaufschlagenden Stellantriebes in eine gegen den Windlauf ausgeschwenkte Bereitschaftsstellung ausgeschwenkt. In dieser Bereitschaftsstellung kann der als Verriegelungsglied vorgesehene Haken die verdeckseitige Öse, bei entsprechend an den Windlauf angenähertem Dach, erfassen, so dass sie in die Verriegelungsstellung eingefahren und in dieser gehalten werden kann.

Während das Ausfahren des Hakens in die Bereitschaftsstellung koordiniert zum Ausfahren des Verdecks aus einer Ablagestellung in seine Schließstellung erfolgt, wird bei Annäherung des Verdeckes an den Windlauf durch einen dem Verdeck zugeordneten Auslösestift ein Steuerventil beaufschlagt, über das der als Stellantrieb für das Verriegelungsglied dienende Hydraulikzylinder angesteuert wird, der so in den Hydraulikkreis eingebunden ist, dass sein Stellkolben kolbenstangenseitig ständig mit Druck beaufschlagt ist, bezüglich der Gegenseite, der die im Querschnitt größere Kolbenfläche zugeordnet ist, aber zu- und abschaltbar an den Hydraulikkreis angeschlossen ist. Der Bereitschaftsstellung des Hakens entspricht bei dieser bekannten Lösung die eingefahrene Stellung des Hydraulikzylinders, der Verriegelungsstellung dessen ausgefahrene Lage, so dass bei Überführung des Verriegelungsgliedes in die Verriegelungsstellung gegen den kolbenstangenseitig konstant anliegenden Arbeitsdruck gearbeitet wird und eine gesonderte Sicherung der Verriegelungsstellung vorgenommen werden muss.

Im Hinblick darauf, dass die Bereitschaftsstellung eine ausgefahrene Stellung für den Haken als Verriegelungsglied darstellt und nur dann angefahren werden kann, solange das Gegenglied, also die Öse, nicht im Verstellweg des Hakens liegt, muss der Auslösestift entweder verhältnismäßig weit überstehen und/oder versetzt zu Haken und Öse liegen. Insgesamt ergibt eine relativ aufwendige Konstruktion, bei der bedingt durch die Übersetzungsverhältnisse des Stellantriebes auch eine verhältnismäßig starke Dimensionierung desselben erforderlich ist.

Der Erfindung liegt die Aufgabe zugrunde, eine Vorrichtung der eingangs genannten Art zu schaffen, die einen vereinfachten Aufbau ermöglicht und auf Basis derer sich eine einfache Steuerung für Zuziehverschlüsse realisieren lässt.

Gemäß der Erfindung wird dies mit den Kennzeichnenden Merkmalen des Anspruches 1 erreicht.

Die Absicherung der Bereitschaftsstellung als Sperrlage erfolgt dabei erfindungsgemäß über ein ein Gelenkviereck bildendes Lenkergetriebe, das in der Bereitschaftsstellung und/oder in der Verriegelungsstellung Endstellungen aufweist, die beispielsweise und bevorzugt Übertotpunktlagen darstellen. Dadurch kann in der Bereitschaftsstellung, und gegebenenfalls in entsprechender Weise auch in der Verriegelungsstellung, gewünschtenfalls also in beiden Stellungen allein aufgrund der Getriebefunktion eine mechanische Sicherung ohne Zusatzmaßnahmen erreicht werden, was insbesondere für die Verriegelungsstellung wesentlich ist, um unabhängig von der Druckversorgung die Verriegelungsstellung aufrecht erhalten zu können.

Insbesondere bietet die Ausgestaltung des Führungsgetriebes als Lenkergetriebe auch die Möglichkeit, bei gleichbleibender, seitens des Stellantriebes aufgebrachter Stellkraft den auf das Verriegelungsglied wirkenden Kraftanteil so zu variieren, dass sich dieser ausgehend von der Bereitschaftsstellung in Richtung auf die Verriegelungsstellung vergrößert und im Bereich der Verriegelungsstellung ein Maximum erreicht. Ein solcher Verlauf erweist sich unter anderem auch unter Sicherheitsaspekten, zum Beispiel als Einklemmschutz, als zweckmäßig, zumal sich in Verbindung mit einer derartigen Übersetzung ausgehend von der Bereitschaftsstellung ein Anstieg der Schließgeschwindigkeit erreichen lässt.

Für die Absicherung der Bereitschaftsstellung als Sperrlage erweist sich zwar eine formschlüssige Sperrung als besonders vorteilhaft. In Abhängigkeit von der Größe der über das Gegenelement auf das Verriegelungsglied in der Annäherung an die Verriegelungsstellung ausgeübten Kräfte kann aber auch eine kraftschlüssige Abstützung, beispielsweise eine Abstützung durch einen Federanschlag als überfahrbaren Anschlag ausreichend sein. Letzteres beispielsweise bei schweren Deckelteilen, die beim Einschwenken auf das das Verriegelungsglied tragende Element gebremst abgefangen werden sollen, um den Verriegelungsvorgang als solchen gut beherrschen zu können.

Für die jeweilige Sperrlage erweist es sich als zweckmäßig, wenn von den Basis und Koppel des Gelenkvierecks verbindenden Lenkern der eine in der der Bereitschaftsstellung entsprechenden Stellung und der andere in der der Verriegelungsstellung entsprechenden Stellung zur Koppel etwa in Flucht liegen, was bei entsprechender Zuordnung des Verriegelungsgliedes zum Lenkergetriebe auch einen in Richtung der Schwenkebene flachen Getriebeaufbau ermöglicht.

Zur Vereinfachung des Gesamtaufbaus erweist es sich als zweckmäßig, das Verriegelungsglied im Anlenkpunkt eines Lenkers an der Koppel mit dem Lenkergetriebe zu verbinden, und für die Anlenkung des Stellantriebes am Lenkergetriebe den Anlenkpunkt des anderen Lenkers an der Koppel zu wählen. Dadurch entfallen gesonderte Anlenkpunkte und ergeben sich auch besonders günstige Kraftverhältnisse.

Dem Verbindungsglied ist erfindungsgemäß zur Steuerung des Schwenkweges zwischen Bereitschaftsstellung und Verriegelungsstellung eine Formschluss-Gleitkopplung in einem zur Basis des Gelenkviereckes lagefesten Führungspunkt zugeordnet, wobei es sich als einfach und zweckmäßig erweist, den Führungspunkt der Formschluss-Gleitkopplung durch einen der basisseitigen Anlenkpunkte des Lenkergetriebes zu bilden. Besonders zweckmäßig ist es, wenn der basisseitige Führungspunkt der Formschluss-Gleitkopplung durch den basisseitigen Anlenkpunkt des Lenkers gebildet wird, in dessen Anlenkpunkt zur Koppel der Stellantrieb angreift, so dass die Anlenkpunkte des Gelenkviereckes im Hinblick auf die Anlenkung des Stellantriebes sowie die Anlenkung des Verriegelungsgliedes mit einer Doppelfunktion belegt sind, was den Gesamtaufbau vereinfacht.

Im Hinblick auf die Verriegelung der Elemente sind dem Verriegelungsglied und dem Gegenglied jeweils ein Kupplungsglied zugeordnet, wobei als Kupplungsglieder zweckmäßigerweise einerseits ein Kupplungszapfen und andererseits ein Kupplungsmaul vorgesehen werden können.

Im Hinblick darauf, dass in Verbindung mit dem gegenseitigen Auflaufen der Kupplungsglieder bei Annäherung der Elemente zunächst die in der Bereitschaftsstellung gegebene Sperrstellung aufgelöst werden muss, erweist es sich als zweckmäßig, wenn das Kupplungsmaul eine Ausgestaltung aufweist und in Verbindung zum dem Verriegelungsglied zugeordneten Kupplungszapfen derart angeordnet ist, dass die eine Flanke des Kupplungsmaules für den Kupplungszapfen eine Fangfläche bildet, von der der Kupplungszapfen im Rahmen der weiteren Verstellung des Verriegelungsgliedes in Richtung auf die Schließstellung gegen die andere Flanke zur Anlage wechselt, die eine Rastfläche bildet, wobei die die Fangfläche enthaltende Flanke in Gegenrichtung zum Rachen des Kupplungsmaules über die Rastflanke hinausgreift, so dass bei flach verlaufendem Schwenkweg des Verriegelungshebels im Bereich des von diesem getragenen Kupplungszapfen eine sichere Erfassung des Kupplungszapfens über das Kupplungsmaul möglich ist.

Im Rahmen der Erfindung bildet die Zuordnung des Kupplungszapfens zum Verriegelungsglied und des Kupplungsmaules zum Gegenglied eine bevorzugte Ausgestaltung, insbesondere wenn das Verriegelungsglied dem feststehenden Element zugeordnet ist, gegen das das dem Gegenelement zugeordnete Gegenglied verschwenkbar ist. Das Gegenglied kann beispielsweise durch eine Halterung für einen Kofferraumdeckel oder auch einen Kofferraumdeckel gebildet sein, während das Verriegelungsglied mit zugehörigem Führungsgetriebe dem anderen Element, also beispielsweise dem Aufbau eines Fahrzeuges zugeordnet ist. In Abhängigkeit vom jeweiligen Anwendungsfall ist es jedoch auch möglich, den Kupplungszapfen dem Gegenglied zuzuordnen, und das Kupplungsmaul dem Verriegelungsglied.

Im Rahmen der Erfindung erweist es sich des Weiteren als zweckmäßig, wenn die Ebene des Kupplungsmaules etwa senkrecht zum Kupplungszapfen steht und die Schwenkebene der gegeneinander zu verriegelnden Teile in etwa mit der Schwenkebene des Verriegelungsgliedes zusammenfällt. Im Rahmen der Erfindung ist dies aber nicht zwingend, vielmehr kann die Schwenkebene der Elemente auch quer zur Schwenkebene des Verriegelungsgliedes liegen.

Für den Stellantrieb erweist sich ein hydraulischer Verstellmechanismus, insbesondere ein hydraulischer Stellzylinder, als zweckmäßig, wobei der Zuzieh- bzw. Verriegelungsvorgang bei Annäherung der gegeneinander zu verriegelnden Elemente selbsttätig eingeleitet wird, indem im Laufe der Annäherung, nahe der Endstellung der Elemente im verriegelten Zustand, eine zunächst gegebene, und zwar als Sperrstellung gegebene Bereitschaftsstellung aufgelöst und dadurch die Verstellung über den Verstellantrieb freigegeben wird, über den in der Folge das Verriegelungsglied in die Verriegelungsstellung überführt wird. Da das Verriegelungsglied in seiner Bereitschaftsstellung in Bezug auf in Zuziehrichtung über den Stellantrieb eingeleitete Kräfte zunächst blockiert ist, d. h. über den Stellantrieb nicht entsprechend verfahren werden kann, kann der Stellantrieb in Zuziehrichtung "vorgespannt" sein, was in Bezug auf einen als Hydraulikzylinder ausgebildeten Stellantrieb dadurch zu erreichen ist, dass dieser in Zuziehrichtung permanent mit der Druckseite der Hydraulikversorgung verbunden ist. Hierzu stellt der Hydraulikzylinder kolbenstangenseitig in offener Verbindung zur Druckquelle, so dass eine gezielte Ansteuerung nur in Gegenrichtung, also beispielsweise zum Öffnen oder zum Aufstellen nötig ist, da infolge der Flächenunterschiede bei gleichen Drücken die kolbenstangenseitig wirkende Gegenkraft kleiner ist.

Die Verbindung zwischen dem jeweiligen Antriebselement des Stellantriebes und dem Verriegelungsglied kann in Abhängigkeit von baulichen Gegebenheiten aber auch über gesonderte Gestängeverbindungen, Bowdenzüge oder dergleichen erfolgen, ferner ist auch eine elektrische Ausgestaltung des Stellantriebes im Rahmen der Erfindung möglich.

Das Verriegelungsglied ist vorstehend bezüglich seines Zusammenwirkens mit dem Gegenglied im Hinblick auf eine Zuziehfunktion angesprochen. In Umkehrung des Ablaufes kann das Verriegelungsglied aber auch genutzt sein, um nach Lösen der Verriegelung das Gegenglied und das diesem zugeordnete Gegenelement in eine Lage zu überführen, die der Bereitschaftsstellung des Verriegelungsgliedes entspricht, also in eine leichte Öffnungslage für das Gegenelement, beispielsweise in einer Funktion als Betätigungshilfe.

Weitere Einzelheiten und Merkmale der Erfindung ergeben sich aus den Ansprüchen. Ferner wird die Erfindung mit weiteren Details noch anhand der Zeichnungen erläutert. Es zeigen:
- Figur 1: stark schematisiert, in Seitenansicht den Rückteil eines Kraftfahrzeuges mit Klappverdeck und einem Kofferraumdeckel, unterhalb dessen zumindest teilweise auch der Ablagekasten für das in seine Öffnungslage verbrachte Klappverdeck liegt, und zwar bei geschlossenem Kofferraumdeckel,
- Figur 2: eine der Figur 1 entsprechende Darstellung bei den Ablagekasten freigebender Schwenklage des Kofferraumdeckels, in der dieser über einen zugeordneten Tragrahmen - und nach Lösen der diesem zugeordneten, vorderen Verriegelungsvorrichtung - nach hinten oben verschwenkt ist,
- Figur 3: in stark schematisierter Darstellung die wesentlichen Elemente einer für diesen Zweck geeigneten, erfindungsgemäßen Verriegelungsvorrichtung in einer Lage, in der der Tragrahmen in die der Schliesslage des Kofferraumdeckels entsprechende Lage zurückgeführt ist, kurz bevor der Verriegelungsvorgang eingeleitet wird,
- Figur 4: eine der Figur 3 entsprechende Darstellung in dem Punkt der Annäherungsphase, in dem das karosserieseitige Verriegelungsglied über das dem Tragrahmen zugeordnete Gegenglied tangiert wird,
- Figur 5: eine Stellung der Verriegelungsvorrichtung in der Annäherung an die Verriegelungsposition, in der das karosserieseitige Verriegelungsglied über das Gegenglied aus einer als Sperrstellung dienenden Bereitschaftsstellung (Figur 4) soweit in Richtung auf die Verriegelungsstellung verschwenkt ist, dass die Sperrstellung aufgehoben ist und eine weitere Verschwenkung über den Stellantrieb möglich ist,
- Figur 6: eine weitere Stellung im Verriegelungsablauf, wobei die zunächst vom Gegenglied auf das Verriegelungsglied ausgeübte Antriebsfunktion - Überführung von der eine Sperrstellung bildenden Bereitschaftsstellung in eine Freigabestellung - auf den Stellantrieb übergegangen ist und das Verriegelungsglied über den Stellantrieb in eine Mitnahmelage für das Gegenglied verschwenkt ist,
- Figur 7: eine nächste Stufe im Verriegelungsablauf, in der das Verriegelungsglied das Gegenglied vollständig oder nahezu vollständig in die Verriegelungsstellung eingeschwenkt hat, und
- Figur 8: die Endstellung des Verriegelungsgliedes in der Verriegelungsposition der über die Verriegelungsvorrichtung zu verbindenden Elemente, hier des Tragrahmens und des Fahrzeugaufbaues, bei formschlüssiger Sicherung des Verriegelungsgliedes in der Verriegelungsstellung.

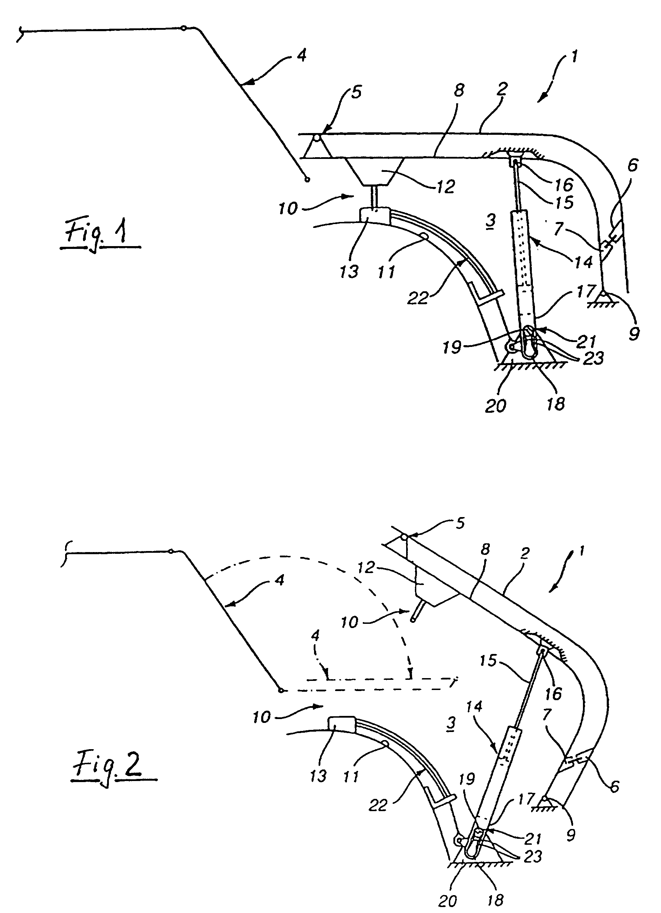

In dem in Figuren 1 und 2 schematisch dargestellten Ausschnitt eines Personenkraftwagens ist dessen Heck mit 1 bezeichnet, und der heckseitig vorgesehene Stauraum insgesamt mit 3. Dieser Stauraum 3 umfasst einen Ablagebereich für das insgesamt mit 4 bezeichnete Klappverdeck, das in Figur 1 geschlossen dargestellt ist und für das in Figur 2 gestrichelt eine Ablagestellung im Stauraum 3 angedeutet ist. Der zumindest bei geschlossenem Klappverdeck als Kofferraum nutzbare Stauraum 3 ist über einen Kofferraumdeckel 2 zu verschließen, der ausgehend von seiner geschlossenen Lage in Figur 1 um eine in seinem vorderen, dachnahen Bereich liegende, in Fahrzeugquerrichtung verlaufende Schwenkachse 5 in eine nicht dargestellte Öffnungslage zu schwenken ist.

Über die Schwenkachse 5 ist der Kofferraumdeckel 2 an einem Tragrahmen 8 befestigt, der seinerseits am Fahrzeugaufbau angelenkt ist, mit dem in dessen rückwärtigem, nach unten abgebogenem Bereich der Kofferraumdeckel 2 über ein Schloss 6, 7 lösbar zu verbinden ist.

Der Tragrahmen 8 ist seinerseits an seinem rückwärtigen, unteren Ende über eine in Querrichtung verlaufende Schwenkachse 9 am Aufbau angelenkt, um diese Achse nach hinten oben verschwenkbar und zusammen mit dem von ihm getragenen Kofferraumdeckel 2 in eine Öffnungslage zu überführen, in der das Klappverdeck 4 in den Stauraum 3 einzuklappen ist.

Die Verriegelung des Tragrahmens 8 im vorderen dachnahen Bereich über eine Verriegelungsvorrichtung 10.

Die Verriegelungsvorrichtung 10 umfasst bezüglich der beiden gegeneinander zu verriegelnden Elemente, nämlich des Tragrahmens 8 und des Aufbaues je ein zugehöriges Glied, von denen aufbauseitig im Bereich des Radkastens 11 das Verriegelungsglied 13 und tragrahmenseitig ein Gegenglied 12 vorgesehen ist. Das Gegenglied 12 und das Verriegelungsglied 13 sind hier nur schematisch angedeutet und die erfindungsgemäße Ausbildung der Verriegelungsvorrichtung 10, für die bezüglich der Figuren 1 und 2 nur ein bevorzugter Anwendungsfall erläutert ist, wird anhand der nachfolgenden Figuren näher beschrieben.

Der Verriegelungsvorrichtung 10 ist im Ausführungsbeispiel gemäß Figuren 1 und 2 ein Stellantrieb 21 zugeordnet, der ausgehend vom Verriegelungsglied 13 einen Seilzug 22 umfasst, der an einem Hydraulikzylinder 14 angelenkt ist. Dieser ist aufbauseitig in Zylinderlängsrichtung in einem Zylinderrohr 17 verschiebbar über einen Gelenkbolzen 19 von einem Lagerbock 20 getragen und mit seiner Kolbenstange 15 über einen Achsbolzen 16 am Tragrahmen 8 angelenkt. Ist der Zylinder 14 eingefahren, und zwar bei verrasteter Verriegelungsvorrichtung 10, so befindet sich der Tragbolzen 19 in einer in den Figuren nicht dargestellten unteren Lage bezüglich des zylinderseitigen, im Zylinderrohr 17 vorgesehenen Langloches 18, wobei das Zylinderrohr 17 das Langloch 18 in einer an den Boden des Zylinders 14 anschliessenden Verlängerung desselben aufweist. Wird der Zylinder 14 auf seiner Vollkolbenseite dann mit Druck beaufschlagt, so verschiebt sich das Zylinderrohr 17 gegenüber dem im Lagerbock 20 gehaltenen Gelenkbolzen 19 im Langloch 18 zunächst in die hier dargestellte obere Lage, und zwar unter Überwindung eines Schiebewiderstandes, der durch zwei in Richtung der Langlochwände verlaufende und den Bolzen seitlich beaufschlagende, gegeneinander gewölbte Blattfedern 23 gebildet ist. Mit der Verschiebung des Zylinderrohres 17 nach unten wird der Seilzug 22 gestrafft, und das Verriegelungsglied 13 gibt das dem Tragrahmen 8 zugeordnete Gegenglied 12 frei, so dass der Tragrahmen 8 mit dem zugeordneten Kofferraumdeckel 2, wie in Figur 2 veranschaulicht, in eine rückwärtige Schwenklage verlagert wird, in der das Klappverdeck 4 im Stauraum 3 untergebracht wird. Wird der Zylinder 14 in Gegenrichtung, also kolbenstangenseitig beaufschlagt, so läuft der Vorgang entgegengesetzt ab, und es wird das Zylinderrohr 17 gegenüber dem Gelenkbolzen 19 nach oben, also gegen den Tragrahmen 8 verlagert, sobald das Gegenglied 12 sich auf dem Verriegelungsglied 13 abstützt. Mit der Verlängerung des Zylinderrohres 17 in die nicht dargestellte untere Lage im Langloch 18 wird der Seilzug 22 freigegeben, und damit die Verriegelungsvorrichtung 10 geschlossen.

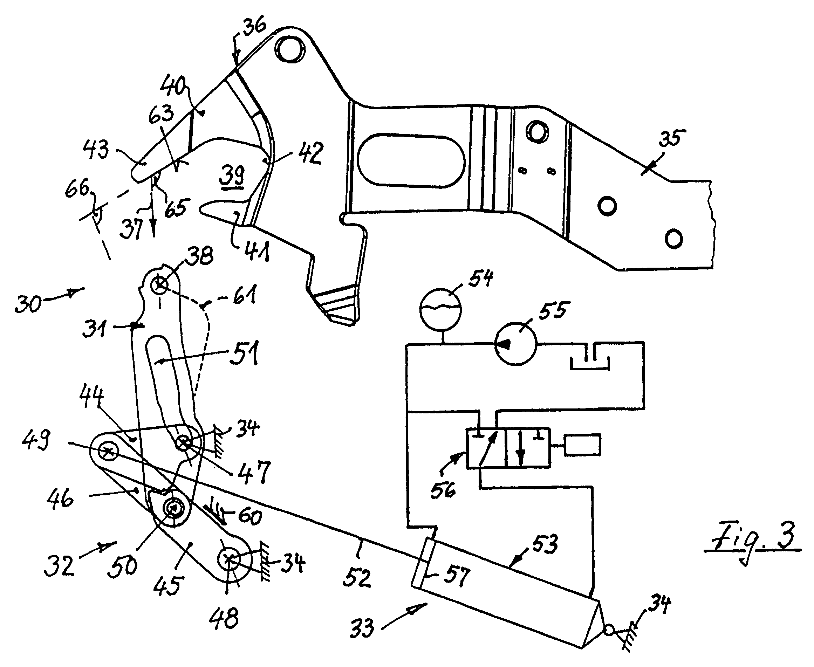

Eine für diesen Zweck einsetzbare Verriegelungsvorrichtung anderen Aufbaus betrifft die Erfindung, die nachstehend anhand der Figuren 3ff näher erläutert wird, wobei diese Verriegelungsvorrichtung insgesamt mit 30 bezeichnet ist und hier nur bezüglich der für das Verständnis der Erfindung wesentlichen Teile dargestellt ist. Von diesen ist ein Verriegelungsglied mit 31, ein diesem zugeordnetes Führungsgetriebe mit 32 und ein zugehöriger Stellantrieb mit 33 bezeichnet. Verriegelungsglied 31, Führungsgetriebe 32 und Stellantrieb 33 sind dem Tragelement der über die Verriegelungsvorrichtung 30 gegeneinander zu verriegelnden Elemente zugeordnet, wobei das Tragelement, analog zur Gestaltung gemäß Figuren 1 und 2 durch den schematisch angedeuteten Fahrzeugaufbau 34 gebildet ist.

Zum Fahrzeugaufbau 34 korrespondiert in der Analogie zu Figuren 1 und 2 der Tragrahmen 8 als Gegenelement 35, wobei von diesem nur der in das Gegenglied 36 zum Verriegelungsglied 31 auslaufende Endteil gezeigt ist, nicht aber die aufbauseitige Anlenkung über eine Schwenkachse und deren Lage, so dass auch diesbezüglich auf die Prinzipdarstellung gemäß Figuren 1 und 2 verwiesen wird.

Figur 3 zeigt für das Verriegelungsglied 31 - korrespondierend zum Verriegelungsglied 13 in Figur 1 und 2 - und das Gegenglied 36 - korrespondierend zum Gegenglied 12 in Figur 1 und 2 -in ihrer Lage zueinander eine Stellung, wie sie beim Verschwenken des Tragrahmens 35 in seine Schliesslage kurz vor Erreichen der Verriegelungslage gegeben ist, wobei die weitere Bewegung des Gegengliedes 36 in Richtung auf die Verriegelungslage für den Tragrahmen 35 durch den Pfeil 37 veranschaulicht ist.

Dem Verriegelungsglied 31 und dem Gegenglied 36 sind im Ausführungsbeispiel jeweils ein Kupplungsglied zugeordnet, und es ist dieses Kupplungsglied seitens des Verriegelungsgliedes 31 durch einen Kupplungszapfen 38 gebildet, und seitens des Gegengliedes 36 durch ein Kupplungsmaul 39. Das Kupplungsmaul 39 weist eine quer zum Kupplungszapfen 38 verlaufende Maulebene auf und bildet zum Kupplungszapfen 38 einen Fangschnabel, der, bezogen auf die Richtung des Pfeiles 37, eine obere Fangflanke 40 und eine untere Rastflanke 41 aufweist, wobei die Fangflanke 40 in einer in Gegenrichtung zum Rachen 42 des Kupplungsmaules 39 sich erstreckenden Nase 43 ausläuft, die in Erstreckungsrichtung der Rastflanke 41 über diese hinausgreift.

Das Verriegelungsglied 31 ist als Hebel ausgebildet, der über das Führungsgetriebe 32 geführt ist. Letzteres ist als Lenkergetriebe ausgebildet und umfasst Lenker 44 und 45, die durch eine Koppel 46 verbunden sind und deren von der Koppel 46 abgelegene, basisseitige Anlenkpunkte aufbaufest sind und mit 47 und 48 bezeichnet sind. Die koppelseitigen Anlenkpunkte der Lenker 44 und 45 sind mit 49 und 50 bezeichnet. Das als Hebel gestaltete Verriegelungsglied 31 ist mit dem Führungsgetriebe in dessen Anlenkpunkten 47 und 50 verbunden, wobei der der Basis zugehörige und aufbaufeste Anlenkpunkt 47 den Führungspunkt einer Formschluss-Gleitkopplung bildet, die, dem Verriegelungsglied 31 zugeordnet, eine Führungskulisse 51 aufweist, welche sich in Längsrichtung des Verriegelungsgliedes 31 erstreckt und in ihrer Erstreckungsrichtung etwa mit der Verbindungsgeraden zwischen dem Kupplungszapfen 38 und dem Anlenkpunkt 50 zusammenfällt, in dem die Koppel 46 mit dem Lenker 45 verbunden ist. In dem anderen Anlenkpunkt 49 der Koppel 46, in dem diese mit dem Lenker 44 verbunden ist, greift der Stellantrieb 33 an, und zwar über die Kolbenstange 52 des den Stellantrieb 33 bildenden Stellzylinders 53, der im Ausführungsbeispiel als Hydraulikzylinder ausgebildet ist und der kolbenstangenseitig, wie in Figur 3 angedeutet, über einen volumenausgleichenden Druckspeicher 54 ungesteuert an die Druckseite der Pumpe 55 angeschlossen ist. In Gegenrichtung erfolgt der Anschluss an den Hydraulikkreis beispielsweise über ein 3/2-Wegeventil 56. Die unterschiedliche Größe der beiderseitigen Wirkflächen des Kolbens 57 macht es möglich, den Stellzylinder 53 in Richtung der Kolbenstange 52 trotz permanenter Beaufschlagung dieser Kolbenseite zu verstellen, wenn über das Wegeventil 56 eine entsprechende Ansteuerung erfolgt.

In der Ausgangslage gemäß Figur 3 ist der Stellzylinder 53, wie dargestellt, kolbenstangenseitig, d.h. in Einfahrrichtung vorgespannt. Die seitens der Kolbenstange 52 ausgeübte Zugkraft wird über das Führungsgetriebe 32 abgefangen und in den Anlenkpunkten 47 und 48 gegen den Fahrzeugaufbau 34 abgestützt, da das Getriebe 32 blockiert ist. Erreicht wird dies im Ausführungsbeispiel dadurch, dass der im vom kolbenstangenseitigen Anlenkpunkt 49 an der Koppel 46 und im Anlenkpunkt 50 mit der Koppel 46 verbundene Lenker 45 zur Koppel 46 in zumindest gestreckter, bevorzugt überstreckter Lage liegt, und zwar bei blockierender Abstützung gegen den anderen Lenker 44. Diese Abstützung wird im Ausführungsbeispiel durch eine dem Lenker 45 zugeordnete Nase 58 erreicht, die sich gegen eine Ausformung 59 des Lenkers 44 abstützt.

Anstelle einer solchen Blockierung über entsprechenden Formschluss zwischen Gliedern des Führungsgetriebes 32 kann auch einen unmittelbare Abstützung gegen einen aufbauseitigen Anschlag erfolgen, wie er bei 60 in Figur 3 beispielsweise angedeutet ist.

Im Rahmen der Erfindung ist es aber auch möglich, eine entsprechende Lagesicherung des Verriegelungsgliedes 31 in der Stellung gemäß Figur 3 trotz entsprechender Zugbelastung über den Stellantrieb 33 dann sicherzustellen, wenn der gezeigten Endstellung lediglich eine nahezu gestreckte Lage von Koppel 46 und Lenker 45 entspricht, und zwar bei federnder Abstützung derselben in Richtung auf deren überstreckte Lage. Eine solche federnde Abstützung kann, was hier nicht dargestellt ist, beispielsweise durch eine überfahrbare Rastfeder erfolgen, zumal in der dargestellten Lage aufgrund der für das Führungsgetriebe 32 gegebenen Hebelstellungen und Hebelverhältnisse ein gewollt schlechtes Übersetzungsverhältnis für die seitens des Stellzylinders 53 ausgeübte Zugkraft gegeben ist.

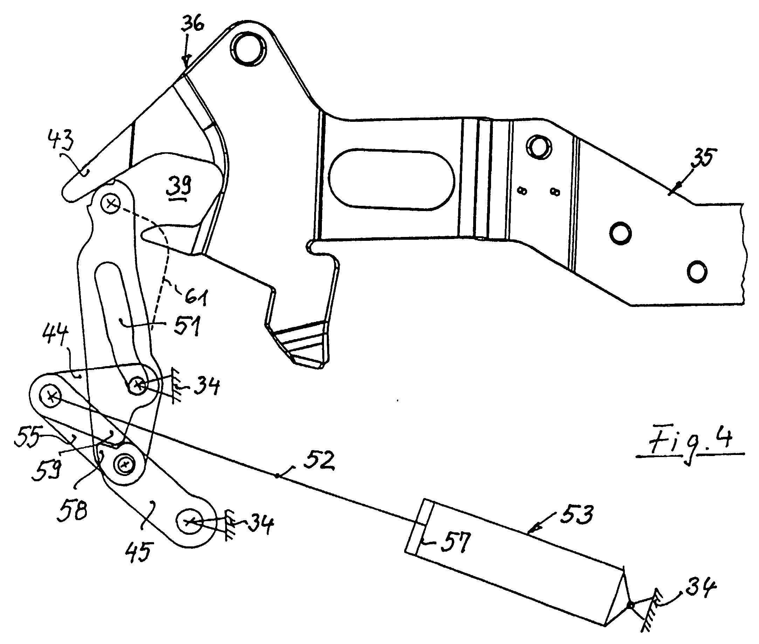

Ausgehend von Figur 3 ist bei geöffneter Verriegelungsvorrichtung somit für das Verriegelungsglied 31 trotz entsprechender Beaufschlagung durch den Stellantrieb 33 eine vorgegebene, gesperrte Stellung gegeben, in der das Verriegelungsglied 31 bei weiterer Annäherung des Gegenelementes 35 vom Gegenglied 36 beaufschlagt wird, wie dies Figur 4 zeigt.

In Figur 4, wie auch in den anderen Figuren, ist für den vom Verriegelungsglied 31 getragenen Kupplungszapfen 38 der Weg 61 strichliert angedeutet, der ausgehend von der Ausgangslage gemäß Figuren 3 und 4, die eine Bereitschaftsstellung des Verriegelungsgliedes 31 zeigen, aufgrund der Führung über das Führungsgetriebe 32 durchlaufen wird. Eingeleitet wird dieser Schwenkvorgang, da die angesprochene Bereitschaftsstellung, wie anhand der Figur 3 erläutert, eine Sperrstellung ist, dadurch, dass das Verriegelungsglied 31 von der Nase 43 des Gegengliedes 36, bei Annäherung in Richtung des Pfeiles 37 gemäß Figur 1, beaufschlagt wird, und zwar derart, dass sich ein Drehmoment bezüglich des aufbaufesten Anlenkpunktes 47 im bezogen auf die Figuren rechtsdrehenden Sinne ergibt, so dass über das Verriegelungsglied 31 als bezogen auf den Anlenkpunkt 47 zweiarmigen Hebel der vom Kupplungsglied 38 abgelegene Anlenkpunkt 50 die Koppel 46 und den Lenker 45 in Gegenrichtung zur anschlaggesicherten Endstellung verschwenkt. Damit wird die in der Bereitschaftsstellung gemäß Figuren 3 und 4 zunächst gegebene Sperrstellung aufgehoben und die weitere Verschwenkung des Verriegelungsgliedes 31 über den Stellantrieb 33 ermöglicht, wobei das Führungsgetriebe 32 bezüglich des Lenkers 44 und der Koppel 46 aus einer Ausgangslage gemäß Figuren 3 und 4, in der Koppel 46 und Lenker 44 unter einem verhältnismäßig kleinen Winkel zueinander stehen, zunehmend in Richtung auf eine gestreckte Lage überführt werden, mit sich über dem Verlauf des Verstellweges zunehmend verbesserndem Übersetzungsverhältnis. Figur 4 zeigt diesbezüglich die Einleitung des Schwenkvorganges bei Annäherung des Gegenelementes 35 an das Verriegelungsglied 31, bezogen auf Figuren 1 und 2 des Tragrahmens 8 an dessen in Figur 1 gezeigte Schließstellung, Figur 5 eine Zwischenstellung, in der die Sperrstellung aufgehoben ist und der Kupplungszapfen 38 des Verriegelungsgliedes 31 einerseits über die Nase 43 des Gegengliedes 36 gedrückt und andererseits über das Verriegelungsglied 31 unter dem Einfluss der Zugkraft des Stellantriebes 33 weiter in das Kupplungsmaul 39 eingeführt wird.

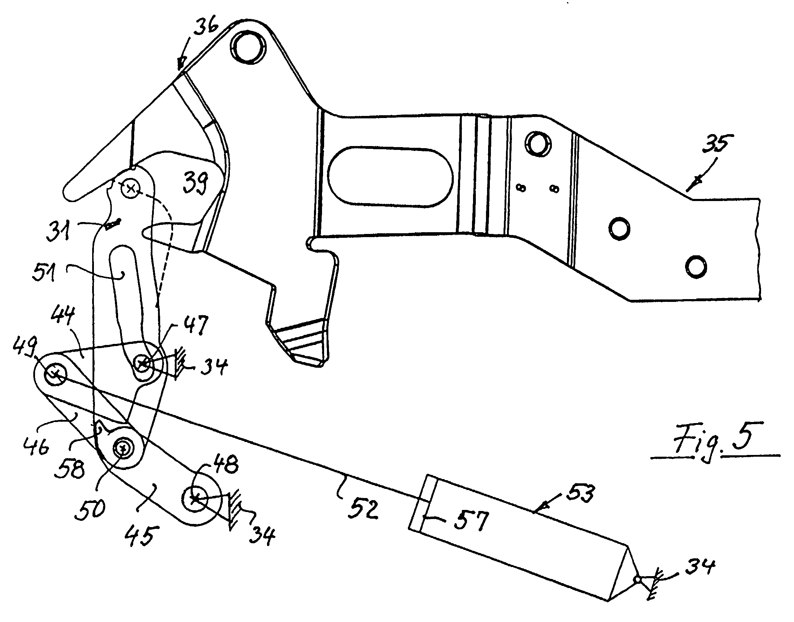

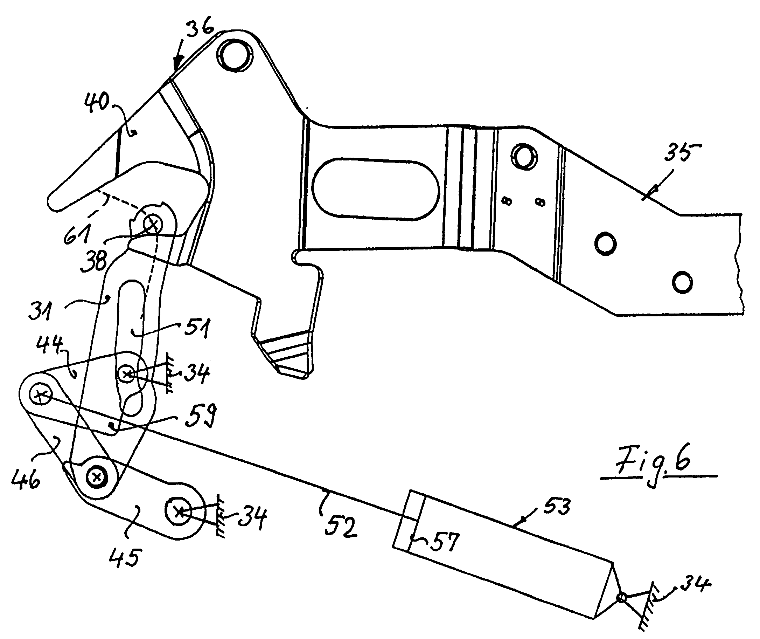

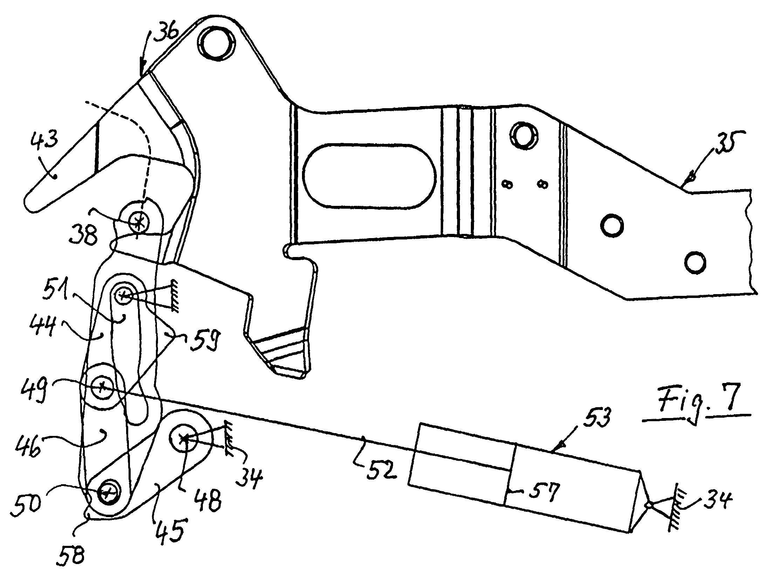

Figur 6 zeigt im weiteren, dass im Wege des weiteren Einlaufens des Kupplungszapfens 38 in das Kupplungsmaul 39, nunmehr allein durch die Schwenkbewegung des Verriegelungsgliedes 31 aufgrund dessen Führung über das Führungsgetriebe 32, der Kupplungszapfen 38 gegen die Rastflanke 41 aufläuft und somit im weiteren Schwenkweg das Gegenglied 36 und das dieses tragende Gegenelement 35 in Schliessrichtung mitnimmt. Hierbei streckt sich, wie Figuren 6 und 7 zeigen, das durch die Koppel 46 und den Lenker 44 gebildete Abstützdreieck für die im Anlenkpunkt 49 angelenkte Kolbenstange 52 zunehmend, so dass sich ein verbessertes Übersetzungsverhältnis ergibt, wobei dieser Effekt noch dadurch verstärkt wird, dass die über das Führungsgetriebe 32 eingeleitete Stellkraft am Verriegelungsglied 31 ebenfalls unter einem zunehmend günstigeren Hebelverhältnis wirksam wird.

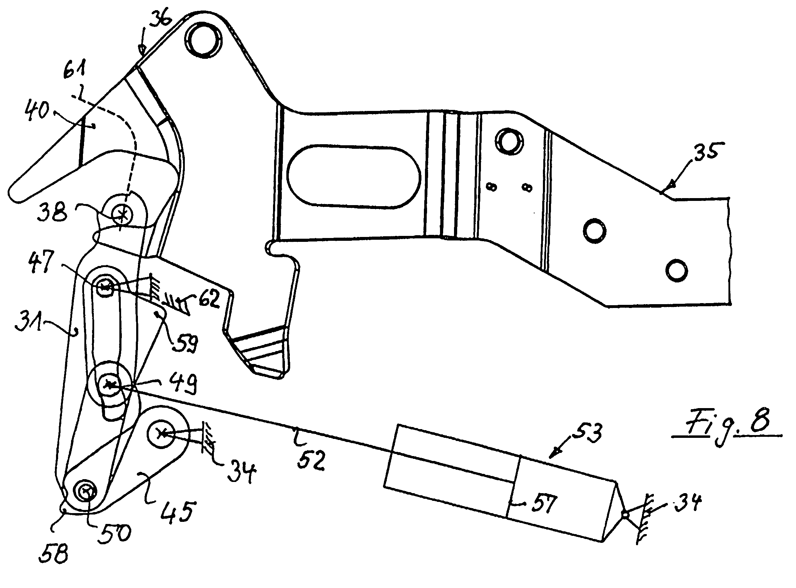

Gemäß Figur 7 ist die Verriegelungslage erreicht, wenn der Lenker 44 und die Koppel 46 zumindest nahezu eine Strecklage erreicht haben, und es wird die Verriegelungsstellung gemäß Figur 8 in erfindungsgemäß bevorzugter Weise dadurch gesichert, dass Lenker 44 und Koppel 46 eine überstreckte Lage erreichen, die anschlaggesichert ist. Der diesbezügliche Anschlag ist in Figur 8 mit 62 bezeichnet, aufbaufest und bevorzugt dem Lenker 44 derart zugeordnet, dass er mit diesem im Bereich von dessen Ausformung 59 zusammenwirkt. Die Ausformung 49 ist bezogen auf das dargestellte Ausführungsbeispiel durch den Scheitelbereich des Lenkers 44 bei dreiecksförmiger Ausgestaltung desselben gebildet, wobei die Basis des Dreiecks durch die Verbindungsgerade der Anlenkpunkte 47 und 49 gebildet ist. Der Vergleich der Figuren 3 und 8 zeigt, dass von den den Scheitelwinkel begrenzenden Flanken des Lenkers 44 jeweils eine andere mit dem zugehörigen Anschlag, d.h. mit der Nase 58 des Lenkers 45 in Figur 3 und dem aufbauseitigen Anschlag 62 in Figur 8 zusammenwirkt. Die erfindungsgemäße, in Figur 8 durch Übertotpunktstellung gesicherte Verriegelungsstellung gewährleistet eine Sicherung der Verriegelung auch bei druckloser Hydraulik.

Wie die Figuren veranschaulichen ist das Führungsgetriebe 32 als Lenkergetriebe ausgebildet und bildet ein Gelenkviereck, bei dem die Lenker 44, 45 im wesentlichen gleiche Länge aufweisen und die Länge der Koppel 46 etwa der Länge der Lenker 44, 45 entspricht, bevorzugt etwas größer ist als diese. Die Länge der Basis, also der Abstand zwischen den Anlenkpunkten 47 und 48, liegt in der Größenordnung des 1,5-fachen der Lenkerlänge.

Die durch die Verbindungsgerade des Kupplungsbolzens 38 mit dem getriebeseitigen Anlenkpunkt 50 bestimmte Erstreckungsrichtung des Verriegelungsgliedes 31 liegt unter einem verhältnismäßig kleinen Winkel zur Erstreckungsrichtung der Basis, wobei bezogen auf diesen sich in Richtung auf das Gegenglied 36 öffnenden Winkel die Flankenfläche 63 der in der Nase 43 auslaufenden Flanke 40 unter einem größeren Winkel 65 zu dieser Verbindungsgeraden verläuft als die Erstreckungsrichtung der Basis (Winkel 66), zu der die Führungskulisse 51 in der Bereitschaftsstellung gemäß Figur 3 einen etwa parallelen Verlauf aufweist.

Als Stellantrieb 33 ist im Ausführungsbeispiel ein hydraulischer Antrieb gezeigt, im Rahmen der Erfindung sind auch andere Antriebsformen, beispielsweise mechanisch über einen Bowdenzug oder elektrisch möglich.

Vorteilhaft ist es im Rahmen der Erfindung, dass in Umkehrung des Schließvorganges die Verriegelungsvorrichtung auch dazu dienen kann, das Gegenglied aus seiner der Verriegelungsstellung entsprechenden Lage in eine leichte Öffnungsstellung anzuheben, und so dazu beitragen kann, beim Öffnen etwa auftretende Losbrechkräfte zu überwinden bzw. eine schwächere Auslegung eines für das weitere Öffnen des Gegengliedes erforderlichen Stellantriebes zu ermöglichen.

Um die zur Überwindung der Bereitschaftsstellung als Sperrstellung erforderlichen, seitens des Gegenelementes 35 zu übertragenden Kräfte gering zu halten, erweist es sich als zweckmäßig, wenn die Flankenfläche 63 der Fangflanke 40 zur über das Führungsgetriebe 32 bestimmten Bewegungsbahn des Kupplungszapfen 38 unter einem Winkel in der Größenordnung von etwa 45 bis 60 Grad liegt, um ausreichende Verstellwege in Richtung auf den Rachen 42 des Kupplungsmaules 39 bei vertretbaren Reibkräften zu erreichen, da trotz der angestrebten und erfindungsgemäß auch erreichten kleinen, raumsparenden Bauform eine hinreichende Überdeckung zwischen dem Kupplungszapfen 38 und der Fangflanke 40 gegeben sein muss, um auch größere Toleranzen ausgleichen zu können und ein sicheres Erfassen einerseits und eine sichere Verriegelung andererseits sicherzustellen.

Im Hinblick auf die angestrebte raumsparende Konstruktion ist es auch zweckmäßig, das Verriegelungsglied 31 als zweischneidigen Hebel auszubilden, zwischen den das Gegenglied 36 mit einschneidiger Tragflanke 40 und Rastflanke 41 eingreift.

## Patentansprüche

1. Vorrichtung zur Verriegelung zweier relativ zueinander verstellbarer, zwangsgeführter Elemente in einer Verriegelungsposition, in der die Elemente aneinander angrenzend verbunden sind, insbesondere zur Verriegelung eines eine Fahrzeugöffnung abdeckenden Teiles gegenüber dem Fahrzeugaufbau, bei der das eine Element ein Tragelement (34) für ein Führungsgetriebe (32) mit einem Verriegelungsglied (31) bildet, bei der das andere Element als Gegenelement (35) mit einem Gegenglied (36) versehen ist, bei der das Verriegelungsglied (31) über das Führungsgetriebe (32) aus einer Bereitschaftsstellung zur Erfassung des Gegengliedes (36) in eine der Verriegelungsposition der Elemente (34, 35) entsprechende Verriegelungsstellung für das erfasste Gegenglied (36) überführbar ist und bei der das Führungsgetriebe (32) mit einem Stellantrieb (32) verbunden ist, wobei das Verriegelungsglied (31) in seiner Bereitschaftsstellung gegen Verstellung durch den Stellantrieb (32) in Richtung auf seine Verriegelungsstellung gesperrt und aus dieser gegen Verstellung durch den Verstellantrieb (33) gesperrten Lage durch Beaufschlagung über das Gegenelement (35) zu lösen ist,
**dadurch gekennzeichnet,**
**dass** als Führungsgetriebe (32) ein Lenkergetriebe vorgesehen ist, das ein Gelenkviereck mit Anlenkpunkten (47 - 50) bildet, das eine der Bereitschaftsstellung und eine der Verriegelungsstellung entsprechende Endstellung aufweist.

2. Vorrichtung nach Anspruch 1,
**dadurch gekennzeichnet,**
**dass** das Verriegelungsglied (31) über das dem Gegenelement (35) zugeordnete Gegenglied (36) in seine die Verstellung über den Stellantrieb (33) in Richtung auf die Verriegelungsstellung freigebende Lage zu überführen ist.

3. Vorrichtung nach Anspruch 1,
**dadurch gekennzeichnet,**
**dass** die Bereitschaftsstellung als Sperrlage anschlaggesichert ist.

4. Vorrichtung nach Anspruch 1,
**dadurch gekennzeichnet,**
**dass** die Bereitschaftsstellung als Sperrlage federgesichert ist.

5. Vorrichtung nach Anspruch 1,
**dadurch gekennzeichnet,**
**dass** das Lenkergetriebe (32) eine Ausbildung aufweist, bei der, bezogen auf eine vorgegebene Stellkraft des Stellantriebes (33), das Verriegelungsglied (31) im Bereich seiner Verriegelungsstellung maximal belastet ist.

6. Vorrichtung nach Anspruch 1,
**dadurch gekennzeichnet,**
**dass** von den Basis und Koppel (46) des Gelenkviereckes verbindenden Lenkern (44, 45) der eine Lenker (45) in der der Bereitschaftsstellung entsprechenden Stellung und der andere Lenker (44) in der der Verriegelungsstellung entsprechenden Endstellung zur Koppel (46) etwa in Flucht liegt.

7. Vorrichtung nach einem der Ansprüche 5 oder 6,
**dadurch gekennzeichnet,**
**dass** das Verriegelungsglied (31) im Anlenkpunkt (50) eines Lenkers (45) an der Koppel (46) mit dem Lenkergetriebe (32) verbunden ist.

8. Vorrichtung nach einem der Ansprüche 5 bis 7,
**dadurch gekennzeichnet,**
**dass** der Stellantrieb (33) im Anlenkpunkt (49) eines Lenkers (44) an der Koppel (46) mit dem Lenkergetriebe (32) verbunden ist.

9. Vorrichtung nach einem der Ansprüche 5 bis 8,
**dadurch gekennzeichnet,**
**dass** der Stellantrieb (33) und das Verriegelungsglied (31) in jeweils einem anderen der beiden Anlenkpunkte (49, 50) der Koppel (46) an den Lenkern (44, 45) mit dem Lenkergetriebe (32) verbunden ist.

10. Vorrichtung nach einem der Ansprüche 5 bis 9,
**dadurch gekennzeichnet,**
**dass** das Verriegelungsglied (31) durch eine Formschluss-Gleitkopplung in einem zur Basis des Gelenkviereckes lagefesten, durch den Anlenkpunkt (47) gebildeten Führungspunkt gelagert ist.

11. Vorrichtung nach Anspruch 10,
**dadurch gekennzeichnet,**
**dass** der Führungspunkt der Formschluss-Gleitkopplung durch einen der basisseitigen Anlenkpunkte (47) des Lenkergetriebes (32) gebildet ist.

12. Vorrichtung nach Anspruch 10 oder 11,
**dadurch gekennzeichnet,**
**dass** der basisseitige, den Führungspunkt der Formschluss-Gleitkopplung bildende Anlenkpunkt (47) dem Lenker (44) zugeordnet ist, in dessen Anlenkpunkt (49) zur Koppel (46) der Stellantrieb (33) angreift.

13. Vorrichtung nach Anspruch 2,
**dadurch gekennzeichnet,**
**dass** dem Verriegelungsglied (31) und dem Gegenglied (36) jeweils ein Kupplungsglied (38, 39) zugeordnet ist und dass von den Kupplungsgliedern das eine als Kupplungszapfen (38) und das andere als Kupplungsmaul (39) ausgebildet ist.

14. Vorrichtung nach einem der Ansprüche 1 bis 13,
**dadurch gekennzeichnet,**
**dass** das Verriegelungsglied (31) in seiner Bereitschaftsstellung eine Lage einnimmt, in der sein getriebeseitiger Anlenkpunkt (50), sein durch den Anlenkpunkt (47) gebildeter Führungspunkt und sein durch einen Kupplungszapfen (38) gebildetes Kupplungsglied in etwa auf einer Verbindungsgeraden liegen.

15. Vorrichtung nach Anspruch 14,
**dadurch gekennzeichnet,**
**dass** die Erstreckungsrichtung der Verbindungsgeraden in der Bereitschaftsstellung etwa der Erstreckungsrichtung der Basis des Gelenkviereckes entspricht.

16. Vorrichtung nach Anspruch 14 und 15,
**dadurch gekennzeichnet,**
**dass**, bezogen auf die Bereitschaftsstellung, der im durch den Anlenkpunkt (47) gebildeten Führungspunkt angelenkte Lenker (44) und die Koppel (46) zueinander spitzwinklig liegen.

17. Vorrichtung nach einem der Ansprüche 15 oder 16,
**dadurch gekennzeichnet,**
**dass**, bezogen auf die Bereitschaftsstellung, die Koppel (46) und der im Anlenkpunkt (50) des Verriegelungsgliedes (31) anschließende Lenker (45) etwa gleiche Erstreckungsrichtung aufweisen.

18. Vorrichtung nach Anspruch 17,
**dadurch gekennzeichnet,**
**dass** die Koppel (46) und der im Anlenkpunkt (50) des Verriegelungsgliedes (31) anschließende Lenker (45) eine in Richtung auf den Führungspunkt überstreckte Lage einnehmen.

19. Vorrichtung nach Anspruch 17,
**dadurch gekennzeichnet,**
**dass** die Koppel (46) und der im Anlenkpunkt (50) des Verriegelungsgliedes (31) anschließende Lenker (45) eine gestreckte Lage einnehmen.

20. Vorrichtung nach einem der Ansprüche 17 bis 19,
**dadurch gekennzeichnet,**
**dass**, bezogen auf die Bereitschaftsstellung, die Koppel (46) und/oder der im Anlenkpunkt (50) des Verriegelungsgliedes (31) anschließende Lenker (45) in Richtung auf den Führungspunkt federbelastet sind.

21. Vorrichtung nach einem der Ansprüche 17 bis 20,
**dadurch gekennzeichnet,**
**dass**, bezogen auf die Bereitschaftsstellung, die Koppel (46) und/oder der im Anlenkpunkt (50) des Verriegelungsgliedes (31) anschließende Lenker (45) im Schwenkweg auf den Führungspunkt anschlagbegrenzt sind.

22. Vorrichtung nach einem der Ansprüche 12 bis 21,
**dadurch gekennzeichnet,**
**dass** die Formschluss-Gleitkopplung eine Führungskulisse (51) umfasst, die sich in Erstreckungsrichtung der Verbindungsgeraden des Anlenkpunktes (50) zwischen Verriegelungsglied (31) und Koppel (46) und dem dem Verriegelungsglied (31) zugeordneten, durch den Kupplungszapfen (38) gebildetes Kupplungsglied erstreckt.

23. Vorrichtung nach einem der Ansprüche 1 bis 22,
**dadurch gekennzeichnet,**
**dass** die Lenker (44, 45) etwa gleiche Länge aufweisen.

24. Vorrichtung nach einem der Ansprüche 1 bis 23,
**dadurch gekennzeichnet,**
**dass** die Koppel (46) länger als ein Lenker (44 bzw. 45) ist.

25. Vorrichtung nach einem der Ansprüche 1 bis 24,
**dadurch gekennzeichnet,**
**dass**, bezogen auf die Bereitschaftsstellung, die Kraftwirkungslinie des Stellantriebes (33) mit dem der Winkelhalbierenden des von Koppel (46) und im Führungspunkt des Verriegelungsgliedes (31) angelenktem Lenker (44) eingeschlossenen Winkels zusammenfällt.

26. Vorrichtung nach einem der Ansprüche 1 bis 25,
**dadurch gekennzeichnet,**
**dass** in der der Verriegelungsposition der Elemente (34, 35) entsprechenden Verriegelungsstellung die Koppel (46) und der im Führungspunkt angelenkte Lenker (44) etwa eine gestreckte Lage einnehmen.

27. Vorrichtung nach einem der Ansprüche 1 bis 26,
**dadurch gekennzeichnet,**
**dass** in der der Verriegelungsposition der Elemente (34, 35) entsprechenden Verriegelungsstellung die Koppel (46) und der im Führungspunkt des Verriegelungsgliedes (31) angelenkte Lenker (44) eine in Richtung auf die Basis des Gelenkviereckes überstreckte Lage einnehmen.

28. Vorrichtung nach Anspruch 26 oder 27,
**dadurch gekennzeichnet,**
**dass** in der der Verriegelungsposition der Elemente (34, 35) entsprechenden Verriegelungsstellung die Koppel (46) und der im Führungspunkt des Verriegelungsgliedes (31) angelenkte Lenker (44) eine zur Wirkungslinie der Stellkraft des Stellantriebes (33) etwa senkrechte Erstreckung aufweisen.

29. Vorrichtung nach einem der Ansprüche 1 bis 28,
**dadurch gekennzeichnet,**
**dass** die Länge der Führungskulisse (51) etwa der Länge der Koppel (46) entspricht.

30. Vorrichtung mindestens nach Anspruch 13,
**dadurch gekennzeichnet,**
**dass** das Verriegelungsglied (31) als Kupplungsglied einen Kupplungszapfen (38) trägt.

31. Vorrichtung mindestens nach Anspruch 13,
**dadurch gekennzeichnet,**
**dass** das Gegenglied (36) als Kupplungsglied ein Kupplungsmaul (39) aufweist.

32. Vorrichtung nach Anspruch 31,
**dadurch gekennzeichnet,**
**dass** das Kupplungsmaul (39) sich in Schwenkrichtung des Verriegelungsgliedes (31) erstreckt.

33. Vorrichtung nach Anspruch 31 oder 32,
**dadurch gekennzeichnet,**
**dass** das Kupplungsmaul (39) bezogen auf den Kupplungszapfen (38) eine diesen in der Verriegelungsstellung übergreifende Fangflanke (40) und eine diesen untergreifende Rastflanke (41) aufweist.

34. Vorrichtung nach Anspruch 33,
**dadurch gekennzeichnet,**
**dass** die Fangflanke (40) einer in Gegenrichtung zum Rachen (42) des Kupplungsmaules (39) über die Rastflanke (41) hinausragenden Nase (43) zugeordnet ist.

35. Vorrichtung nach einem der Ansprüche 31 bis 34,
**dadurch gekennzeichnet,**
**dass** sich Verriegelungsglied (31) und Rastmaul (39) etwa senkrecht zueinander erstrecken.

36. Vorrichtung mindestens nach Anspruch 1,
**dadurch gekennzeichnet,**
**dass** der Stellantrieb (33) in Richtung auf die Verriegelungsstellung vorgespannt ist.

## Claims

1. Device for the interlocking of two positively guided elements adjustable relative to one another in an interlocking position, in which the elements are connected so as to be adjacent to one another, in particular for the interlocking of a part covering a vehicle orifice with the vehicle body, in which one element forms a carrying element (34) for a guide mechanism (32) with an interlocking member (31), in which the other element is provided as counterelement (35) with a countermember (36), in which the interlocking member (31) is capable of being transferred via the guide mechanism (32) out of a position of readiness for grasping the countermember (36) into an interlocking position for the grasped countermember (36), said interlocking position corresponding to the interlocking position of the elements (34, 35), and in which the guide mechanism (32) is connected to an actuating drive (32), wherein the interlocking member (31), in its position of readiness, is blocked against adjustment by the actuating drive (32) in the direction of its interlocking position and is capable of being released from this position blocked against adjustment by the adjustment drive (33) via the application of the counterelement (35), **characterized in that** a link mechanism is provided as the guide mechanism (32), which link mechanism forms a four-bar linkage with articulation points (47-50), which four-bar linkage has an end position corresponding to the position of readiness and an end position corresponding to the interlocking position.

2. Device according to Claim 1, **characterized in that** the interlocking member (31) can be transferred via the countermember (36) assigned to the counterelement (35) into its position enabling adjustment via the actuating drive (33) in the direction of the interlocking position.

3. Device according to Claim 1, **characterized in that** the position of readiness as blocking position, is stop-secured.

4. Device according to Claim 1, **characterized in that** the position of readiness, as blocking position, is spring-secured.

5. Device according to Claim 6, **characterized in that** the link mechanism (32) has a design in which, with respect to a predetermined actuating force of the actuating drive (33), the interlocking member (31) is subjected to maximum load in the region of its interlocking position.

6. Device according to Claim 1, **characterized in that**, of the links (44, 45) connecting the base and the coupler (46) of the four-bar linkage, one link (45) is approximately in alignment with the coupler (46), in the position corresponding to the position of readiness, and the other link (44) is approximately in alignment with the coupler (46), in the end position corresponding to the interlocking position.

7. Device according to one of Claims 5 or 6, **characterized in that** the interlocking member (31) is connected to the link mechanism (32) at the articulation point (50) of one link (45) on the coupler (46).

8. Device according to one of Claims 5 to 7, **characterized in that** the actuating drive (33) is connected to the link mechanism (32) at the articulation point (49) of one link (44) on the coupler (46).

9. Device according to one of Claims 5 to 8, **characterized in that** the actuating drive (33) and the interlocking member (31) are connected to the link mechanism (32) in each case at a different one of the two articulation points (49, 50) of the coupler (46) on the links (44, 45).

10. Device according to one of Claims 5 to 9, **characterized in that** the interlocking member (31) is mounted by means of a positive sliding coupling at a guide point formed by articulation point 47 fixed in position in relation to the base of the four-bar linkage.

11. Device according to Claim 10, **characterized in that** the guide point of the positive sliding coupling is formed by one of the base-side articulation points (47) of the link mechanism (32).

12. Device according to Claim 10 or 11, **characterized in that** the base-side articulation point (47) forming the guide point of the positive sliding coupling is assigned to the link (44), at whose articulation point (49) on the coupler (46) the actuating drive (33) engages.

13. Device according to Claim 2, **characterized in that** the interlocking member (31) and the countermember (36) are each assigned a coupling member (38, 39) and **in that** one of the coupling members is designed as a coupling pin (38) and the other as a coupling mouth (39).

14. Device according to one of Claims 1 to 13, **characterized in that** the interlocking member (31), in its position of readiness, assumes a position in which its mechanism-side articulation point (50), its guide point formed by the articulation point 47 and its coupling member formed by a coupling pin 38 lie approximately on a straight connecting line.

15. Device according to Claim 14, **characterized in that** the direction of extent of the straight connecting line in the position of readiness corresponds approximately to the direction of extent of the base of the four-bar linkage.

16. Device according to Claim 14 and 15, **characterized in that**, with respect to the position of readiness, the link (44) articulated at the guide point formed by the articulation point 47 and the coupler (46) are at an acute angle to one another.

17. Device according to one of Claims 15 or 16, **characterized in that**, with respect to the position of readiness, the coupler (46) and the link (45) connected to it at the articulation point (50) of the interlocking member (31) have approximately the same direction of extent.

18. Device according to Claim 17, **characterized in that** the coupler (46) and the link (45) connected to it at the articulation point (50) of the interlocking member (31) assume a position overstretched in the direction of the guide point.

19. Device according to Claim 17, **characterized in that** the coupler (46) and the link (45) connected to it at the articulation point (50) of the interlocking member (31) assume a stretched position.

20. Device according to one of Claims 17 to 19, **characterized in that**, with respect to the position of readiness, the coupler (46) and/or the link (45) connected to it at the articulation point (50) of the interlocking member (31) are spring-loaded in the direction of the guide point.

21. Device according to one of Claims 17 to 20, **characterized in that**, with respect to the position of readiness, the coupler (46) and/or the link (45) connected to it at the articulation point (50) of the interlocking member (31) are stop-limited in the pivoting travel toward the guide point.

22. Device according to one of Claims 12 to 21, **characterized in that** the positive sliding coupling comprises a guide slot (51) which extends in the direction of extent of the straight connecting line of the articulation point (50) between the interlocking member (31) and the coupler (46) and the coupling member formed by coupling pin 38 assigned to the interlocking member (31).

23. Device according to one of Claims 1 to 22, **characterized in that** the links (44, 45) have approximately the same length.

24. Device according to one of Claims 1 to 23, **characterized in that** the coupler (46) is longer than a link (44 or 45).

25. Device according to one of Claims 1 to 24, **characterized in that**, with respect to the position of readiness, the force action line of the actuating drive (33) coincides with the bisecting line of the angle formed by the coupler (46) and the link (44) articulated at the guide point of the interlocking member (31).

26. Device according to one of Claims 1 to 25, **characterized in that**, in the interlocking position corresponding to the interlocking position of the elements (34, 35), the coupler (46) and the link (44) articulated at the guide point, assume approximately a stretched position.

27. Device according to one of Claims 1 to 26, **characterized in that**, in the interlocking position corresponding to the interlocking position of the elements (34, 35), the coupler (46) and the link (44) articulated at the guide point of the interlocking member (31) assume a position overstretched in the direction of the base of the four-bar linkage.

28. Device according to Claim 26 or 27, **characterized in that**, in the interlocking position corresponding to the interlocking position of the elements (34, 35), the coupler (46) and the link (44) articulated at the guide point of the interlocking member (31) have an extent approximately perpendicular to the action line of the actuating force of the actuating drive (33).

29. Device according to one of Claims 1 to 28, **characterized in that** the length of the guide slot (51) corresponds approximately to the length of the coupler (46).

30. Device at least according to Claim 13, **characterized in that** the interlocking member (31), as coupling member, carries a coupling pin (38).

31. Device at least according to Claim 13, **characterized in that** the countermember (36), as coupling member, has a coupling mouth (39).

32. Device according to Claim 31, **characterized in that** the coupling mouth (39) extends in the pivoting direction of the interlocking member (31).

33. Device according to Claim 31 or 32, **characterized in that** the coupling mouth (39) has, with respect to the coupling pin (38), a catching flank (40) engaging over the latter in the interlocking position and a detaining flank (41) engaging under said coupling pin.

34. Device according to Claim 33, **characterized in that** the catching flank (40) is assigned to a nose (43) projecting beyond the detaining flank (41) in the opposite direction to the jaw (42) of the coupling mouth (39).

35. Device according to one of Claims 31 to 34, **characterized in that** the interlocking member (31) and the detaining mouth (39) extend approximately perpendicularly to one another.

36. Device at least according to Claim 1, **characterized in that** the actuating drive (33) is prestressed in the direction of the interlocking position.

## Revendications

1. Dispositif de verrouillage de deux éléments à guidage forcé déplaçables l'un par rapport à l'autre dans une position de verrouillage dans laquelle les éléments sont connectés l'un à l'autre de manière adjacente, notamment pour le verrouillage d'une partie recouvrant une ouverture d'un véhicule par rapport à la carrosserie du véhicule, dans lequel l'un des éléments forme un élément porteur (34) pour un mécanisme de guidage (32) avec un organe de verrouillage (31), dans lequel l'autre élément est pourvu, sous forme d'élément conjugué (35), d'un organe conjugué (36) dans lequel l'organe de verrouillage (31) peut être transféré par le biais du mécanisme de guidage (32) d'une position disponible pour saisir l'organe conjugué (36) dans une position de verrouillage correspondant à la position de verrouillage des éléments (34, 35) pour l'organe conjugué saisi (36) et dans lequel le mécanisme de guidage (32) est connecté à un entraînement de commande (32), l'organe de verrouillage (31), dans sa position disponible, étant bloqué dans la direction de sa position de verrouillage contre tout déplacement par l'entraînement de commande (32) et devant être libéré de cette position bloquée contre le déplacement par l'entraînement de commande (33) par sollicitation par l'élément conjugué (35),
**caractérisé en ce que**
l'on prévoit un mécanisme à bras oscillants réalisé sous forme de mécanisme de guidage (32), lequel forme un carré d'articulation avec des points d'articulation (47 - 50), qui présente une position d'extrémité correspondant à la position disponible et une position d'extrémité correspondant à la position de verrouillage.

2. Dispositif selon la revendication 1,
**caractérisé en ce que**
l'organe de verrouillage (31) doit être transféré par le biais de l'organe conjugué (36) associé à l'élément conjugué (35) dans sa position libérant le déplacement par le biais de l'entraînement de commande (33) dans la direction de la position de verrouillage.

3. Dispositif selon la revendication 1,
**caractérisé en ce que**
la position disponible est fixée par une butée en tant que position de blocage.

4. Dispositif selon la revendication 1,
**caractérisé en ce que**
la position disponible est fixée par un ressort en tant que position de blocage.

5. Dispositif selon la revendication 1,
**caractérisé en ce que**
le mécanisme à bras oscillants (32) présente une réalisation dans laquelle, par rapport à une force de réglage prédéfinie de l'entraînement de commande (33), l'organe de verrouillage (31) est sollicité au maximum dans la région de sa position de verrouillage.

6. Dispositif selon la revendication 1,
**caractérisé en ce que**,
parmi les bras oscillants (44, 45) reliant la base et la bielle (46) du carré d'articulation, l'un (45) dans la position correspondant à la position disponible et l'autre (44) dans la position d'extrémité correspondant à la position de verrouillage, sont approximativement en alignement par rapport à la bielle (46).

7. Dispositif selon l'une quelconque des revendications 5 ou 6,
**caractérisé en ce que**
l'organe de verrouillage (31) au point d'articulation (50) d'un bras oscillant (45) à la bielle (46) est connecté au mécanisme à bras oscillants (32).

8. Dispositif selon l'une quelconque des revendications 5 à 7,
**caractérisé en ce que**
l'entraînement de commande (33) au point d'articulation (49) d'un bras oscillant (44) à la bielle (46) est connecté au mécanisme à bras oscillants (32).

9. Dispositif selon l'une quelconque des revendications 5 à 8,
**caractérisé en ce que**
l'entraînement de commande (33) et l'organe de verrouillage (31) sont connectés respectivement au mécanisme à bras oscillants (32) dans un autre des deux points d'articulation (49, 50) de la bielle (46) aux bras oscillants (44, 45).

10. Dispositif selon l'une quelconque des revendications 5 à 9,
**caractérisé en ce que**
l'organe de verrouillage (31) est monté par un accouplement à glissement à engagement positif dans un point de guidage formé par le point d'articulation (47), fixé en position par rapport à la base du carré d'articulation.

11. Dispositif selon la revendication 10,
**caractérisé en ce que**
le point de guidage de l'accouplement à glissement à engagement positif est formé par l'un des points d'articulation du côté de la base (47) du mécanisme à bras oscillants (32).

12. Dispositif selon la revendication 10 ou 11,
**caractérisé en ce que**
le point d'articulation (47) du côté de la base, formant le point de guidage de l'accouplement à glissement à engagement positif, est associé au bras oscillant (44) dans le point d'articulation (49) à la bielle (46) duquel l'entraînement de commande (33) vient en prise.

13. Dispositif selon la revendication 2,
**caractérisé en ce que**
un organe d'accouplement (38, 39) est associé à chaque fois à l'organe de verrouillage (31) et à l'organe conjugué (36) et **en ce que** parmi les organes d'accouplement, l'un est réalisé en tant que tourillon d'accouplement (38) et l'autre en tant que mors d'accouplement (39).

14. Dispositif selon l'une quelconque des revendications 1 à 13,
**caractérisé en ce que**
l'organe de verrouillage (31) dans sa position disponible prend une position dans laquelle son point d'articulation du côté du mécanisme (50), son point de guidage formé par le point d'articulation (47) et son organe d'accouplement formé par un tourillon d'accouplement (38) se trouvent approximativement sur une droite de liaison.

15. Dispositif selon la revendication 14,
**caractérisé en ce que**
la direction d'étendue de la droite de liaison dans la position disponible correspond approximativement à la direction d'étendue de la base du carré d'articulation.

16. Dispositif selon les revendications 14 et 15,
**caractérisé en ce que**
par rapport à la position disponible, le bras oscillant (44) articulé dans le point de guidage formé par le point d'articulation (47) et la bielle (46) sont orientés suivant un angle aigu l'un par rapport à l'autre.

17. Dispositif selon l'une quelconque des revendications 15 ou 16,
**caractérisé en ce que**
par rapport à la position disponible, la bielle (46) et le bras oscillant (45) se raccordant dans le point d'articulation (50) de l'organe de verrouillage (31) présentent approximativement la même direction d'étendue.

18. Dispositif selon la revendication 17,
**caractérisé en ce que**
la bielle (46) et le bras oscillant (45) se raccordant dans le point d'articulation (50) de l'organe de verrouillage (31) adoptent une position sur-allongée dans la direction du point de guidage.

19. Dispositif selon la revendication 17,
**caractérisé en ce que**
la bielle (46) et le bras oscillant (45) se raccordant dans le point d'articulation (50) de l'organe de verrouillage (31) adoptent une position allongée.

20. Dispositif selon l'une quelconque des revendications 17 à 19,
**caractérisé en ce que**
par rapport à la position disponible, la bielle (46) et/ou le bras oscillant (45) se raccordant dans le point d'articulation (50) de l'organe de verrouillage (31) sont sollicités par ressort dans la direction du point de guidage.

21. Dispositif selon l'une quelconque des revendications 17 à 20,
**caractérisé en ce que**
par rapport à la position disponible, la bielle (46) et/ou le bras oscillant (45) se raccordant dans le point d'articulation (50) de l'organe de verrouillage (31) sont limités par une butée dans la course de pivotement au point de guidage.

22. Dispositif selon l'une quelconque des revendications 12 à 21,
**caractérisé en ce que**
l'accouplement à glissement à engagement positif comprend une coulisse de guidage (51) qui s'étend dans la direction d'étendue de la droite de liaison du point d'articulation (50) entre l'organe de verrouillage (31) et la bielle (46) et l'organe d'accouplement formé par le tourillon d'accouplement (38), associé à l'organe de verrouillage (31).

23. Dispositif selon l'une quelconque des revendications 1 à 22,
**caractérisé en ce que**
les bras oscillants (44, 45) présentent approximativement la même longueur.

24. Dispositif selon l'une quelconque des revendications 1 à 23,
**caractérisé en ce que**
la bielle (46) est plus longue qu'un des bras oscillants (44 ou 45).

25. Dispositif selon l'une quelconque des revendications 1 à 24,
**caractérisé en ce que**
par rapport à la position disponible, la ligne d'action de force de l'entraînement de commande (33) coïncide avec la bissectrice de l'angle inclus par la bielle (46) et le bras oscillant (44) articulé dans le point de guidage de l'organe de verrouillage (31).

26. Dispositif selon l'une quelconque des revendications 1 à 25,
**caractérisé en ce que**
dans la position de verrouillage correspondant à la position de verrouillage des éléments (34, 35), la bielle (46) et le bras oscillant (44) articulé dans le point de guidage adoptent approximativement une position allongée.

27. Dispositif selon l'une quelconque des revendications 1 à 26,
**caractérisé en ce que**
dans la position de verrouillage correspondant à la position de verrouillage des éléments (34, 35), la bielle (46) et le bras oscillant (44) articulé dans le point de guidage de l'organe de verrouillage (31) adoptent une position sur-allongée dans la direction de la base du carré d'articulation.

28. Dispositif selon la revendication 26 ou 27,
**caractérisé en ce que**
dans la position de verrouillage correspondant à la position de verrouillage des éléments (34, 35), la bielle (46) et le bras oscillant (44) articulé dans le point de guidage de l'organe de verrouillage (31) présentent une étendue approximativement perpendiculaire à la ligne d'action de la force de réglage de l'entraînement de commande (33).

29. Dispositif selon l'une quelconque des revendications 1 à 28,
**caractérisé en ce que**
la longueur de la coulisse de guidage (51) correspond approximativement à la longueur de la bielle (46).

30. Dispositif selon au moins la revendication 13,
**caractérisé en ce que**
l'organe de verrouillage (31) porte en tant qu'organe d'accouplement un tourillon d'accouplement (38).

31. Dispositif selon au moins la revendication 13,
**caractérisé en ce que**
l'organe conjugué (36) présente en tant qu'organe d'accouplement un mors d'accouplement (39).

32. Dispositif selon la revendication 31,
**caractérisé en ce que**
le mors d'accouplement (39) s'étend dans la direction de pivotement de l'organe de verrouillage (31).

33. Dispositif selon la revendication 31 ou 32,
**caractérisé en ce que**
le mors d'accouplement (39) présente, par rapport au tourillon d'accouplement (38), un flanc d'accrochage (40) venant en prise avec celui-ci dans la position de verrouillage et un flanc d'encliquetage (41) venant en prise en dessous de celui-ci.

34. Dispositif selon la revendication 33,
**caractérisé en ce que**
le flanc d'accrochage (40) est associé à un nez (43) dépassant du flanc d'encliquetage (41) dans la direction opposée à la mâchoire (42) du mors d'accouplement (39).

35. Dispositif selon l'une quelconque des revendications 31 à 34,
**caractérisé en ce que**
l'organe de verrouillage (31) et le mors d'encliquetage (39) s'étendent approximativement perpendiculairement l'un à l'autre.

36. Dispositif selon au moins la revendication 1,
**caractérisé en ce que**
l'entraînement de commande (33) est précontraint dans la direction de la position de verrouillage.
